# EUROPEAN PATENT APPLICATION

(11) **EP 2 654 306 A1**
(43) Date of publication of application: **23.10.2013**
(21) Application number: 11848775.0
(22) Date of filing: 07.12.2011
(51) Int. Cl.: H04N 13/04, G06T 19/00

(54) **IMAGE PROCESSING DEVICE**

(30) Priority: 16.12.2010 JP 2010280314
(71) Applicant: JVC KENWOOD Corporation, Kanagawa 221-0022 (JP)
(72) Inventor: TAKESHITA, Hiroshi, Yokohama-shi, Kanagawa 221-0022 (JP)
(74) Representative: Emde, Eric
(86) International application number: PCT/JP2011/078305
(87) International publication number: WO 2012/081469

(57) **Abstract**

An image processor for processing image data includes: a reproducing operation limit signal generator (12) configured to generate a reproducing operation limit signal for denoting a reproducing operation limit of the image data based on data added to the image data; and a 2D to 3D converter (15) configured to convert the image data to a pseudo-3D image. The 2D to 3D converter (15) is configured to control valid and invalid of an operation of converting the image data from the 2D image to the pseudo-3D image based on the reproducing operation limit signal.

## Description

### Technical Field

The present invention relates to an image processor having a function of converting 2D images to pseudo-3D images.

### Background Art

As an image processor having a function of converting non-3D (2D) images to pseudo-3D (3D) images (2D to 3D converting function), there is known a pseudo-3D image generator as described in PTL 1.

Further, with respect to the pseudo-3D image generator described in PTL 1, as a known applicable example, there is known a professional-use 3D image processor "IF-2D3D1" (made by Victor Company of Japan).

By using the pseudo-3D image generator described above, it is possible to process any 2D image signals to pseudo-3D images to thereby display the pseudo-3D on a display unit.

As contents source of the image signal, those delivered by television broadcasting, internet, or the like, those supplied by recording media such as DVD (Digital Versatile Disc) are conceivable; however, the above pseudo-3D image generator is applicable to any image signals of the above.

However, depending on types of contents, there may be cases where conversion to the pseudo-3D image is not proper in view of generally accepted notion. An example thereof will be given below.

In an opening sentence of many of package media such as DVD, a title logo of a contents holder, a call-for-attention message of copyright protection, and the like are packed. By providing viewers of the contents with an image such as the call-for-attention message, it is an object to claim ownership of the content or to deter copyright infringement such as illegal copy. However, converting the above call-for-attention message and the like to the pseudo-3D image and displaying the same in the display unit would make the display image with a right-eye image superimposed on a left-eye image. Herein, for example, in a case such as the display unit does not have a stereovision function or in another case such as the viewer views the contents without wearing a unit for enabling the stereovision such as stereovision glasses even when the display unit has the stereovision function, the viewed image becomes a double image having the right-eye image superimposed on the left-eye image, thus making it difficult for the viewer to accomplish an ordinary viewing. Thus, the 2D to 3D converting function hinders an ordinary display of claiming of ownership of the contents and the call-for-attention of copyright infringement such as illegal copy intended by the contents holders.

In this case, for meeting the intent of the contents holder, it is necessary to invalid the 2D to 3D converting function by the user operation and to view in a 2D display state as an original image. However, leaving valid/invalid of the 2D to 3D conversion to the viewer's operation signifies that the viewing of the message from the contents holder is avoidable by an intent of the viewer. That is, it becomes possible not to view the message from the contents holder by the viewer himself/herself's intentional valid of the 2D to 3D conversion.

### Citation List

### Patent Literature

PTL 1: JP 2009-044722 A

### Summary of Invention

It is, therefore, an object of the present invention to provide an image processor for properly controlling valid/invalid of a 2D to 3D conversion without going through an intentional operation by the viewer to thereby securely provide the viewer with the message from the contents holder as intended by the contents holder.

Subtitles information is often added to package media contents such as DVD. However, the subtitles information is not added to the portion where the title logo of contents holder, the call-for-attention message of copyright protection, and the like are packed. The reason therefor is that, when subtitles are superimposed on a contents screen and displayed, a screen which the contents holder wants to present to the user is covered and hidden, thus making it impossible for the user to normally view the message from the contents holder, which is not desired by the contents holder.

Further, in general, the package media such as DVD and the reproducer for reproducing the package media and for allowing the user to view the contents includes a structure for controlling such that the reproduction is implemented in the reproducing process according to an intent of the contents holder regardless of the intent or voluntary operation of the contents viewer. It is so configured that, by using this structure, user operations such as fast-forward reproduction, skip reproduction, and chapter forwarding are disabled in the portion where the title logo of the contents holder, the call-for-attention message of copyright protection and the like are packed, thereby displaying a predetermined message to the viewer only for a time desired by the contents holder. This control function is provided in the DVD standard and the like, and manufacturer of DVD reproducer is obligated to produce the product pursuant to the DVD standard; therefore, the viewer viewing the contents by using the DVD reproducer necessarily views the message from the contents holder.

The limit function of package media reproduction is accomplished by, for example, the provision of the navigation command in the DVD standard. According to the provision of the navigation command, the DVD reproducer, when reproducing the disk contents data, monitors the navigation data attached to and stored in the contents data and limits the reproduction operation by the user according to the provision. This operation limit can make a control in response to the scene of the contents, thus making it possible to limit the reproduction operation by the user only to the scene intended by the contents holder.

The subtitles are additional information included in the image contents and is mounted for the user to see the caption. Thus, the subtitles are not assumed to be used otherwise.

Further, as described above, the navigation command is provided so as to limit the reproduction operation of the user and is not assumed to be used otherwise and has no application record.

It is an object of the present invention to be applied for controlling valid/invalid of a 2D to 3D converting function, which is an application different from an inherently assumed application, based on a reproducing operation limit signal as a signal denoting a reproducing operation limit in navigation command information inherently present for limiting a reproducing operation of a user or a subtitles information signal denoting with or without subtitles merely as additional information of contents, which signals are included in image data such as DVD reproduction signal.

That is, it is an object of the present invention to provide an image processor capable of properly presenting the viewer the message from the contents holder without an image disorder attributable to conversion to the pseudo-3D, by using the navigation command information or the information with or without the subtitles for the controlling of valid/invalid of the 2D to 3D converting function to thereby automatically switch valid/invalid of the 2D to 3D conversion without through an intentional operation by the viewer.

For solving the above problem, an image processor according to a first aspect of the present invention includes: a reproducing operation limit signal generator (12) configured to generate a reproducing operation limit signal for denoting a reproducing operation limit of the image data based on data added to the image data; and a 2D to 3D converter (15) configured to convert the image data to a pseudo-3D image. The 2D to 3D converter (15) is configured to control valid and invalid of an operation of converting the image data from the 2D image to the pseudo-3D image based on the reproducing operation limit signal.

The image processor according to the first aspect of the present invention may further include a subtitles information signal generator (15) configured to generate a subtitles information signal for denoting with or without a caption based on the data added to the image data. In this case, the 2D to 3D converter controls valid and invalid of the operation of converting the image data from the 2D image to the pseudo-3D image based on the subtitles information signal in addition to the reproducing operation limit signal.

In accordance with the first aspect of the present invention, controlling valid/invalid of the 2D to 3D converting function based on the signal for denoting the reproducing operation limit in the navigation command information and the subtitles information signal for denoting with or without the subtitles which signals are included in the image data such as DVD reproduction signal enables automatic control of valid/invalid of the 2D to 3D conversion as intended by the contents holder, without going through an operation by the user.

### Brief Description of Drawings

[Fig. 1] Fig. 1 is a block diagram illustrating a basic structure used for an image processor according to each embodiment of the present invention.
[Fig. 2] Fig. 2 is a block diagram illustrating an example in a case that the image processor according to a first embodiment of the present invention is applied to a DVD reproducer.
[Fig. 3] Fig. 3 is a chart for explaining operations of the image processor according to the first embodiment.
[Fig. 4] Fig. 4 is a block diagram illustrating an example in a case that the image processor according to a second embodiment of the present invention is applied to a DVD reproducer.
[Fig. 5] Fig. 5 is a block diagram illustrating an example in a case that the image processor according to a third embodiment of the present invention is applied to a system where a DVD reproducer is separated from a 2D to 3D converter.
[Fig. 6] Fig. 6 is a block diagram illustrating an example in a case that the image processor according to a fourth embodiment of the present invention is applied to a system where a DVD reproducer is separated from a 2D to 3D converter.

### Description of Embodiments

Hereinafter, the embodiments of the present invention will be explained in detail, referring to the drawings. Further, in each of the embodiments, the same reference numerals or signs will be given to the same structural elements as those explained in the former embodiments to omit redundant explanation.

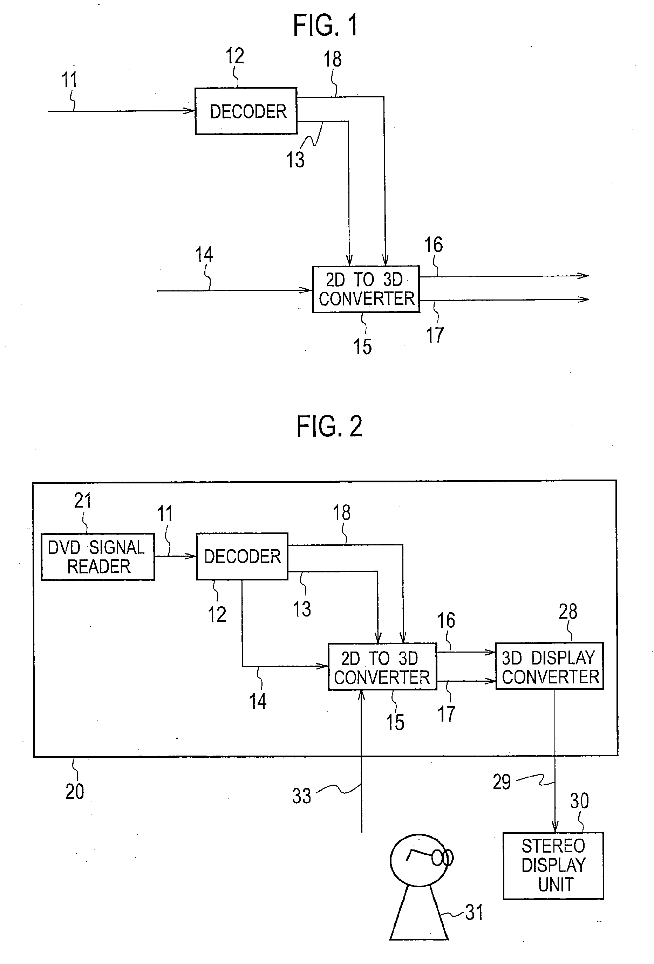

First, as illustrated in Fig. 1, it is assumed to use an apparatus having a function for reading subtitles information and navigation command information which are included in a reproduction signal of a DVD and a function of converting DVD reproduced images into pseudo-3D images.

A DVD reproduction signal 11 is inputted to a decoder 12 having a function of reading the subtitles information and the navigation command information which are included in the DVD reproduction signal 11. Then, based on the inputted DVD reproduction signal 11, the decoder 12 generates and outputs a subtitles information signal 18 for denoting with or without the subtitles and a reproducing operation limit signal 13 which is a signal for denoting a reproduction operation limit in the navigation command information. That is, the decoder 12 functions as a reproduction operation limit signal generator and a subtitles information signal generator. An image signal 14 obtained by decoding the DVD reproduction signal 11 by some measures is inputted to a 2D to 3D converter 15. Then, the 2D to 3D converter 15 generates and outputs a left pseudo-3D image signal 16 and a right pseudo-3D image signal 17. In this case, the subtitles information signal 18 and the reproducing operation limit signal 13 are inputted to the 2D to 3D converter 15 and at least one of the subtitles information signal 18, and the reproducing operation limit signal 13 is used to control switching valid/invalid of the 2D to 3D converting function.

### First Embodiment

The image processor according to a first embodiment, as illustrated in Fig. 2, is applied to a DVD reproducer 20 having a DVD reproducing function and a function of converting the reproduced images of the DVD into the pseudo-3D images.

The encoded image signal 14 is recorded in the DVD to be reproducing. The DVD reproduction signal 11 outputted from a DVD signal reader 21 is inputted to the decoder 12 and is decoded to the image signal 14 and outputted. The outputted image signal 14 is inputted to the 2D to 3D converter 15 for converting a non-3D (2D) image to a pseudo-3D (3D) image. Then, the 2D to 3D converter 15 generates and outputs the left pseudo-3D image signal 16 and the right pseudo-3D image signal 17. The two pseudo-3D signals 16, 17 are inputted to a 3D display converter 28 and are converted to a 3D image format signal 29 as a signal format to be transmitted to a stereo display unit 30, and the 3D image format signal 29 is outputted from the DVD reproducer 20. The thus outputted 3D image format signal 29 is inputted to the stereo display unit 30 to be displayed as stereo view. By taking a viewing method suitable for the stereo display unit 30 such as wearing glasses, a viewer 31 who views the stereo display unit 30 can view, with the pseudo-3D image, the 2D image signal recorded in the DVD. Further, from the decoder 12, the subtitles information signal 18 for denoting with or without the subtitles and the reproducing operation limit signal 13 for denoting the reproduction operation limit in the navigation command information are outputted. The subtitles information signal 18 and the reproducing operation limit signal 13 are inputted to the 2D to 3D converter 15. Further, the 2D to 3D control signal 33 is a signal to control valid/invalid of the 2D to 3D conversion by the user operation. A logical operation based on the subtitles information signal 18, the reproducing operation limit signal 13, and the 2D to 3D control signal 33 controls valid/invalid of the 2D to 3D converting operation implemented by the 2D to 3D converter 15. It is so configured that, when the subtitles information signal 18 is without the subtitles and the reproducing operation limit signal 13 is with the reproduction limit, even implementing valid of the 2D to 3D converting operation by the 2D to 3D control signal 33 is not valid the 2D to 3D converting operation but keeps invalid state, while when the subtitles information signal 18 is with the subtitles or the reproducing operation limit signal 13 is without the reproduction limit, valid/invalid of the 2D to 3D converting operation is switchable by the 2D to 3D control signal 33.

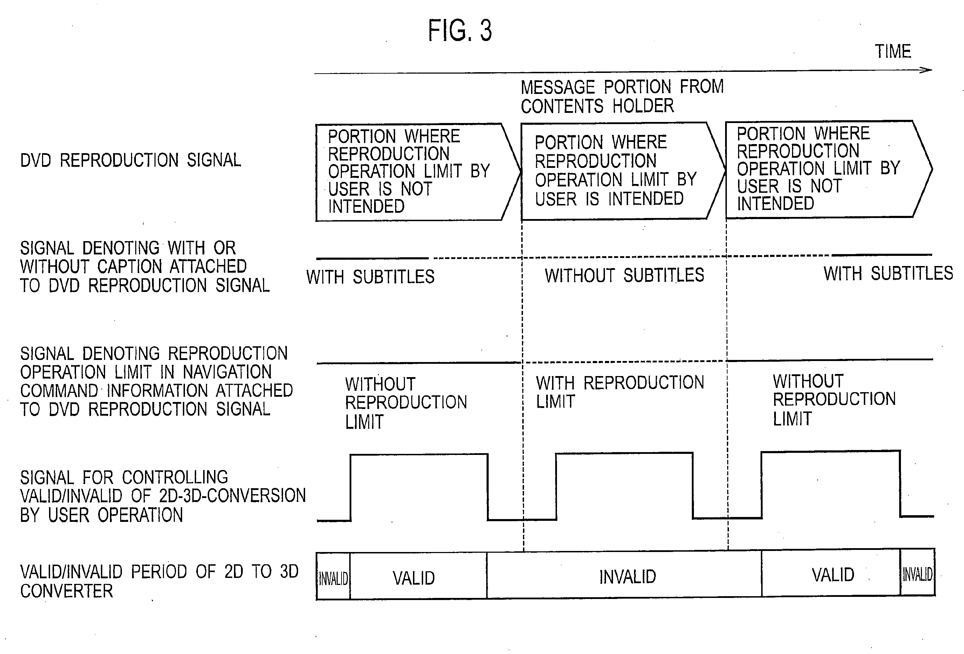

A method of controlling valid/invalid of the 2D to 3D conversion in the image processor is illustrated in Fig. 3. A first row of Fig. 3 denotes the DVD reproduction signal, and illustrates a portion where the contents holder does not intend the reproduction operation limit by the user and a portion where the contents holder intends the reproduction operation limit by the user (a portion of the message from the contents holder). A second row of Fig. 3 is a signal denoting with or without the subtitles information attached to the reproduction signal, where a solid line denotes presence of the subtitles while a broken line denotes absence of the caption. A third row of Fig. 3 is a signal denoting the reproduction operation limit in the navigation command information attached to the DVD reproduction signal, where a solid line denotes without the preproduction limit while a broken line denotes with the reproduction limit. A fourth row of Fig. 3 is a signal for controlling valid/invalid of the 2D to 3D conversion by the user operation, where a low (L) level period denotes invalid of the 2D to 3D conversion while a high (H) level period denotes valid of the 2D to 3D conversion. A fifth row of Fig. 3 denotes valid/invalid period of the 2D to 3D converter, where a valid period of the 2D to 3D converter and a invalid period of the 2D to 3D converter are denoted. As illustrated in Fig. 3, in the message portion from the contents holder where the contents holder intends the user reproduction operation limit, even when the user directs valid of the 2D to 3D converter, it is automatically controlled that the 2D to 3D conversion is invalid.

### Second Embodiment

In the DVD reproducer 20 of the first embodiment, as illustrated in Fig. 2, it is exemplified that the subtitles information signal 18 and the reproducing operation limit signal 13 are outputted from the decoder 12 and the logical operation with the 2D to 3D control signal 33 is implemented in the 2D to 3D converter 15. However, for example, it can be so configured that such a logical operation is implemented in the decoder 12 and only the resultant signal for switching the control of the 2D to 3D conversion is inputted to the 2D to 3D converter 15.

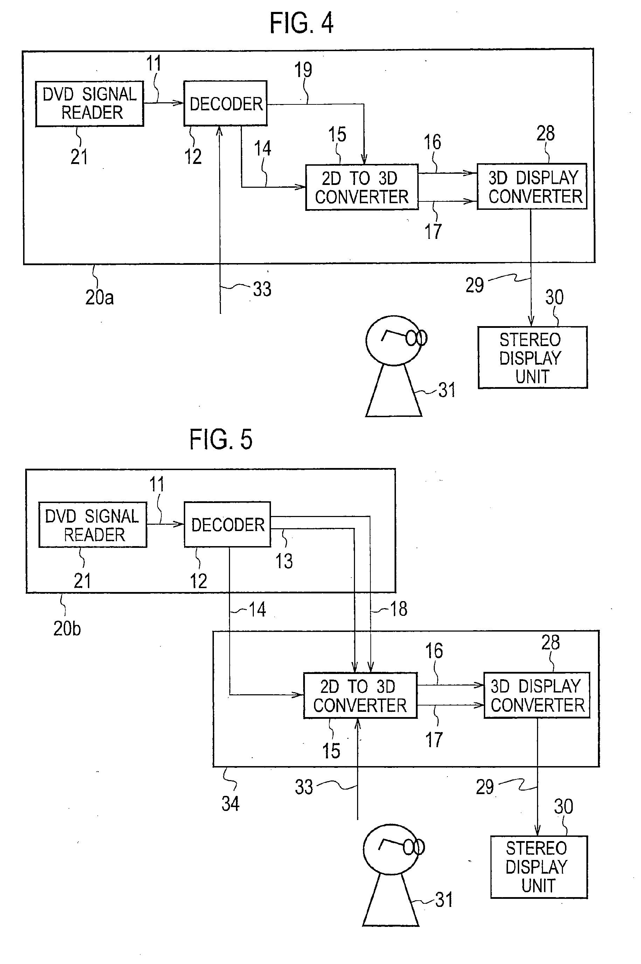

In a DVD reproducer 20a according to a second embodiment, as illustrated in Fig. 4, the 2D to 3D control signal 33 is directly inputted to the decoder 12, thus implementing a logical operation of a subtitles information signal denoting with or without the subtitles detected in the decoder 12 and a reproduction operation limit signal as a signal denoting the reproduction operation limit in the navigation command information detected in the decoder 12. From the decoder 12, a 2D to 3D conversion control switching signal (reference signal) 19 as a result of the above logical operation is outputted. That is, the decoder 12 functions as a reproduction operation limit signal generator, a subtitles information signal generator and a reference signal generator. Only the 2D to 3D conversion control switching signal 19 is inputted to the 2D to 3D converter 15 as a control signal, and the 2D to 3D conversion control switching signal 19 alone is used for controlling valid/invalid of the 2D to 3D conversion.

### Third Embodiment

The first embodiment and the second embodiment respectively exemplify the DVD reproducer 20, 20a where the DVD reproduction function and the function for converting the reproduction image to the pseudo-3D image are incorporated in the same frame. As illustrated in Fig. 5, a third embodiment explains about a case where a system is divided into a DVD reproducer 20b having the DVD reproduction function and a 2D to 3D converter 34 having a function of converting the reproduction image to the pseudo-3D image.

From the DVD reproducer 20b, the subtitles information signal 18 and the reproducing operation limit signal 13 together with the image signal 14 are, respectively, inputted to the 2D to 3D converter 34 via independent transmission paths. Valid/invalid of the 2D to 3D converting operation implemented at the 2D to 3D converter 34 is, similar as the first embodiment and the second embodiment, controlled by the result of the logical operation of the 2D to 3D control signal 33, subtitles information signal 18, and reproducing operation limit signal 13.

### Fourth Embodiment

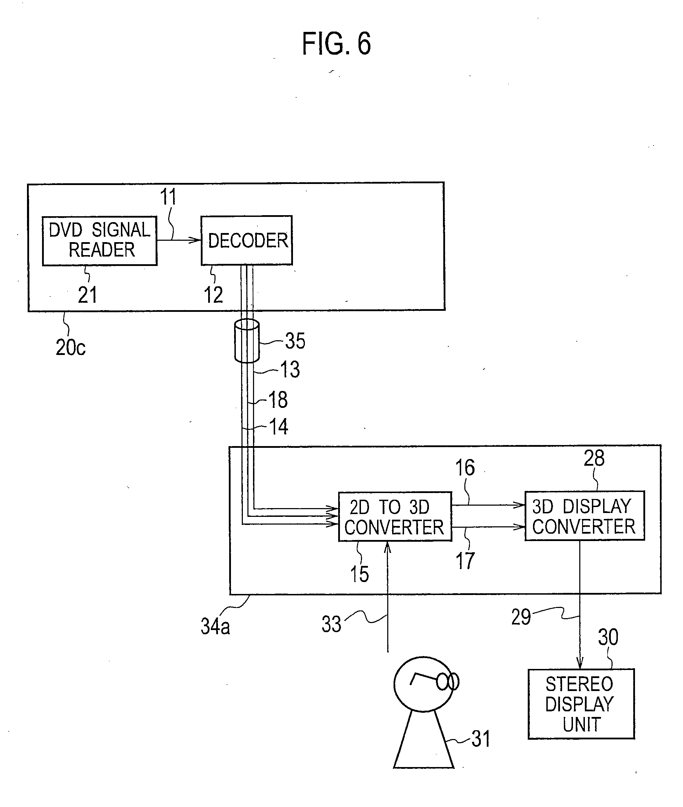

The third embodiment denotes that the image signal 14, the subtitles information signal 18, and the reproducing operation limit signal 13 are transmitted by the independent paths from the DVD reproducer 20b to the 2D to 3D converter 34. Referring to Fig. 6, a fourth embodiment explains a case where the image signal 14, the subtitles information signal 18, and the reproducing operation limit signal 13 are superimposed and transmitted.

According to the fourth embodiment, the description is made of a case in which, as an example of a measure for superimposing the image signal 14 on the reproducing operation limit signal 13, a Vendor Specific Command (CEC 13.9) in CEC (Consumer Electronics Control) command specified by the transmission standard of an HDMI (High-Definition Multimedia Interface) is used.

The transmission of the CEC command is implemented by the HDMI transmission path simultaneously with the image data transmission, thus making it possible to transmit information which is synchronized with the scene of the image data. Vendor Specific Commands (CEC 13.9) is open to a manufacturer of a product having an image transmission function compliant to the HDMI standard, and according to the manufacturer's own determination, voluntary data can be transmitted by the Vendor Specific Commands (CEC 13.9).

A DVD reproducer 20c includes a function of transmitting the reproducing operation limit signal 13 by the Vendor Specific Commands (CEC 13.9). Then, a 2D to 3D converter 34a includes a function of taking out the reproducing operation limit signal 13 transmitted by the Vendor Specific Commands (CEC 13.9). With such configurations, between the DVD reproducer 20c and the 2D to 3D converter 34a, the reproducing operation limit signal 13, together with the reproducing operation limit signal 13 and the image signal 14 can be transmitted by way of an HDMI transmission path 35. Thus, automatic switching of valid/invalid of the 2D to 3D conversion can be accomplished even in a system where the DVD reproducer 20c and the 2D to 3D converter 34a are separated without increasing the new transmission path like the third embodiment.

### Fifth Embodiment

According to the fourth embodiment, as illustrated in Fig. 6, it is denoted that, from the DVD reproducer 20c to the 2D to 3D converter 34a, the image signal 14, the subtitles information signal 18 and the reproducing operation limit signal 13 are superimposed by the one HDMI transmission path 35 and transmitted. According to a fifth embodiment, in the DVD reproducer 20c, a signal (reference signal) equivalent to the 2D to 3D conversion control switching signal 19 in Fig. 4 is generated from at least one of the subtitles information signal 18, and the reproducing operation limit signal 13. That is, in the fourth embodiment, the DVD reproducer 20c functions as an image reproducer, the reproduction operation limit signal generator, the subtitles information signal generator and the reference signal generator. Then, the signal (reference signal) equivalent to the generated 2D to 3D conversion control switching signal 19 together with the image signal 14 is superimposed by the one HDMI transmission path 35 and transmitted. The block diagram of the fifth embodiment is the same as one having such a structure that the two signal lines, that is, the subtitles information signal 18 and reproducing operation limit signal 13 in Fig. 6 are replaced with one signal line equivalent to the 2D to 3D conversion control switching signal 19 as illustrated in Fig. 4.

The present application claims a priority based on the Japanese Patent Application No. 2010-280314 filed December 16, 2010 and the entire contents of this application are incorporated in the description of the present invention by reference.

### Industrial Applicability

An image processor according to the present invention can automatically control valid/invalid of a 2D to 3D conversion as intended by the contents holder, without going through an operation by the user.

## Claims

1. An image processor for processing image data of a 2D image, comprising:
a reproducing operation limit signal generator configured to generate a reproducing operation limit signal for denoting a reproducing operation limit of the image data based on data added to the image data; and
a 2D to 3D converter configured to convert the image data to a pseudo-3D image, wherein
the 2D to 3D converter is configured to control valid and invalid of an operation of converting the image data from the 2D image to the pseudo-3D image based on the reproducing operation limit signal.

2. The image processor according to claim 1, further comprising:
a subtitles information signal generator configured to generate a subtitles information signal for denoting with or without a caption based on the data added to the image data, wherein
the 2D to 3D converter is configured to control valid and invalid of the operation of converting the image data from the 2D image to the pseudo-3D image based on the subtitles information signal in addition to the reproducing operation limit signal.

3. The image processor according to claim 1, further comprising:
an image data reproducer configured to read the image data from a record medium storing therein the image data and for outputting the thus read image data.

4. The image processor according to claim 2, further comprising:
an image data reproducer configured to read the image data from a record medium storing therein the image data and for outputting the thus read image data.

5. The image processor according to claim 3, further comprising:
an image output transmission path configured to transmit, to the 2D to 3D converter, by superimposing the image data outputted from the image reproducer and the reproducing operation limit signal generated at the reproducing operation limit signal generator.

6. The image processor according to claim 4, further comprising:
an image output transmission path configured to transmit, to the 2D to 3D converter, by superimposing the image data outputted from the image reproducer, the reproducing operation limit signal generated at the reproducing operation limit signal generator, and the subtitles information signal generated at the subtitles information signal generator.

7. The image processor according to claim 1 or 2, wherein
the image data is inputted from an outside of the image processor.

8. The image processor according to claim 1, further comprising:
a reference signal generator configured to generate a reference signal for controlling the operation of converting from the 2D image to the pseudo-3D image based on the reproducing operation limit signal, wherein
the 2D to 3D converter is configured to control valid and invalid of the operation of converting the image data from the 2D image to the pseudo-3D image based on the reference signal.

9. The image processor according to claim 2, further comprising:
a reference signal generator configured to generate a reference signal for controlling the operation of converting from the 2D image to the pseudo-3D image based on the reproducing operation limit signal and the subtitles information signal, wherein
the 2D to 3D converter is configured to control valid and invalid of the operation of converting the image data from the 2D image to the pseudo-3D image based on the reference signal.
